# FASCICULE DE BREVET EUROPEEN

(11) **EP 0 875 745 B1**
(45) Date de publication et mention de la délivrance du brevet: **17.11.2004**
(21) Numéro de dépôt: 98107877.7
(22) Date de dépôt: 29.04.1998
(51) Int. Cl.: G01L 23/22, G01P 15/09

(54) **Capteur de cliquetis pour un véhicule automobile**
Fühler für Klopfmessungen in einer Brennkraftmaschine
SENSOR FOR DETECTING PINKING IN A COMBUSTION ENGINE

(30) Priorité: 29.04.1997 FR 9705523
(43) Date de publication de la demande: 04.11.1998
(73) Titulaire: Siemens VDO Automotive S.A.S., 31036 Toulouse Cédex 01 (FR)
(72) Inventeur: Halbinger, Evi, 31400 Toulouse (FR)
(74) Mandataire: Berg, Peter, Dipl.-Ing.

(56) Documents cités:
- WO-A-95/21384
- DE-A- 3 911 875
- GB-A- 2 041 698
- US-A- 4 399 705
- US-A- 4 982 599

## Description

La présente invention concerne un capteur de cliquetis pour un véhicule automobile. Plus particulièrement, un tel capteur est destiné à détecter l'apparition d'un phénomène de cliquetis lors du fonctionnement d'un moteur à combustion interne.

Le phénomène de cliquetis apparaît dès que la combustion dans un des cylindres se réalise de manière non homogène. Le cliquetis se caractérise par des vibrations audibles et provoque des détériorations des pièces mécaniques en mouvement, notamment du piston, mais également de la chambre du cylindre. Il est donc important de détecter l'apparition de ce phénomène et de le contrer.

Les capteurs de cliquetis connus à ce jour sont en fait des accéléromètres placés en relation étroite avec la culasse du moteur et détectant l'apparition de ces vibrations.

Ces capteurs sont en général vissés dans la culasse du moteur et comportent une embase en relation étroite avec le moteur et un empilage constitué par un élément sensible aux vibrations associé à une masse sismique. Le tout est maintenu en pression contre la culasse du moteur par un écrou. L'ensemble ainsi constitué est en général surmoulé pour éviter tout problème d'étanchéité. Deux contacts électriques placés de part et d'autre de l'élément sensible sortent du surmoulage du capteur pour amener le signal capteur vers un dispositif de traitement approprié.

Un exemple d'un tel mode d'assemblage est présenté dans W095/21384. II y est décrit un capteur de cliquetis constitué d'une embase fixée sur le moteur pour loger un élément sensible au cliquetis. Ledit capteur est constitué:
- De l'embase logeant un empilage comportant une rondelle piézo-électrique placée entre deux disques métalliques sur laquelle vient se placer une masse sismique et une rondelle élastique,
- D'un écrou de serrage comprimant uniformément l'empilage contre l'embase.
Ce capteur présente sur la face inférieure de son embase (celle en contact avec la pièce à mesurer) un creux central tel que le diamètre moyen de répartition de la charge sur la surface de contact soit égal ou supérieur au diamètre moyen de l'épaulement de ladite embase. Ceci a pour effet de repousser vers des valeurs plus élevées la fréquence de résonance propre du capteur et de permettre ainsi une plus grande plage de détection en fréquence du cliquetis.

Le capteur de cliquetis ainsi réalisé a l'inconvénient de présenter une hauteur non négligeable due à l'empilage de l'embase, des contacts électriques, de élément sensible, de la masse sismique ainsi que de l'écrou de serrage souvent associé à une rondelle élastique de précontrainte.

En outre, le montage de tels capteurs de cliquetis est rendu complexe en raison de l'obligation d'empiler correctement et dans le bon ordre l'ensemble des éléments ci-dessus évoqués.

Un autre type de capteurs de cliquetis a été proposé dans US4399705. Il y est présenté un capteur comprenant une embase restreinte à une simple rondelle, sur laquelle un empilage est placé. Ledit empilage est constitué d'une rondelle piézo-étectrique placée entre deux disques métalliques. Sur la rondelle piézo-électrique est placée une masse sismique. L'écrou de serrage permettant la mise sous précontrainte de l'empilage est remplacé ici par la vis de fixation du capteur à la pièce à mesurer. Cette conformation ne réduit pas la hauteur générale du capteur et le fragilise. En effet, les efforts de précontrainte de l'empilage sont très inférieurs à ceux de fixation à la pièce à mesurer et l'utilisation d'une seule vis pour les deux fonctions entraîne des risques de détérioration de la rondelle piézo-électrique sous l'effet d'une pression trop élevée.

Pour des questions de diminution des coûts de fabrication et de montage, il est donc important de réduire le nombre de pièces constituant l'empilage du capteur. On cherche également à diminuer la hauteur d'un tel capteur.

Le but de la présente invention est donc de réaliser un capteur de cliquetis présentant une hauteur réduite par rapport à ceux connus jusqu'à présent, et nécessitant le moins de pièces distinctes possible.

A cet effet, la présente invention concerne un capteur adapté pour être monté sur un moteur à combustion interne pour y détecter l'apparition d'un phénomène de cliquetis, le dit capteur étant du type comportant une embase fixée sur le moteur pour loger un élément sensible au cliquetis, le dit capteur étant constitué :
- de l'embase logeant un empilage comportant une paire d'éléments de contact répartis de part et d'autre de l'élément sensible au cliquetis et,
- d'un écrou de serrage comprimant uniformément l'empilage contre l'embase,
le dit capteur étant caractérisé en ce que l'écrou de serrage (37) remplace une masse sismique.

Grâce à ces dispositions, on supprime de l'empilage la masse sismique et la rondelle de précontrainte. Les fonctions assignées à ces deux éléments sont en effet avantageusement réalisées par l'écrou lui-même.

Cet écrou présente, à cet effet, une dimension extérieure correspondant à celle de l'élément sensible. Ainsi, cet écrou a un plus grand diamètre externe que les écrous classiquement utilisés. Il en résulte un appui uniforme et une transmission homogène de l'effort de serrage entre l'écrou et l'empilage. Le capteur ainsi constitué présente avantageusement une hauteur moindre puisque la masse sismique et la rondelle de précontrainte ont été supprimées.

Pour réduire encore le nombre de pièces constituant l'empilage, on a créé un élément unique remplissant à la fois les fonctions de contact électrique et de rondelle isolante.

Selon un autre mode de réalisation, l'embase présente une épaisseur réduite, et de ce fait, la hauteur du capteur ainsi constitué est notablement diminuée.

Contrairement à un préjugé, généralement admis, consistant à interdire une diminution de l'épaisseur de l'embase sous prétexte d'une mauvaise transmission des vibrations en provenance du moteur vers l'élément sensible, on a aminci l'épaisseur de l'embase, mais renforcé cette embase par un rebord annulaire réalisé à sa périphérie externe. De manière surprenante, on a ainsi remarqué que les vibrations en provenance du moteur étaient correctement retransmises à l'élément sensible du capteur bien que l'embase présente une épaisseur amincie. On notera que l'embase amincie présente une épaisseur supérieure ou égale à celle du rebord annulaire.

Un capteur de cliquetis, selon l'invention, comporte donc une embase à épaisseur réduite, une paire d'éléments de contact, présentant une face électriquement conductrice et une face isolante, répartis de part et d'autre de l'élément sensible, et un écrou permettant le serrage de l'ensemble sur la base.

Une pièce isolante de centrage est disposée contre le rebord interne de l'élément annulaire et permet la mise en place aisée de la paire de contacts électriques et de l'élément sensible. Le capteur de cliquetis ainsi constitué présente une épaisseur notablement réduite et un nombre de pièces moindre tout en gardant une très bonne détection des vibrations créées par le cliquetis.

D'autres objets, caractéristiques et avantages de l'invention, ressortiront d'ailleurs de la description qui suit, à titre d'exemple non limitatif, et en référence aux dessins annexés dans lesquels :
- la figure 1 est une vue schématique en coupe montrant, d'une part un capteur de cliquetis selon l'art antérieur, et d'autre part un capteur de cliquetis selon l'invention,
- la figure 2a est une vue schématique en coupe représentant une paire de contacts électriques et une rondelle isolante selon l'art antérieur,
- la figure 2b est une vue schématique en coupe représentant un contact électrique selon l'invention,
- la figure 3 est une vue schématique en coupe représentant un autre mode de réalisation de la présente invention.

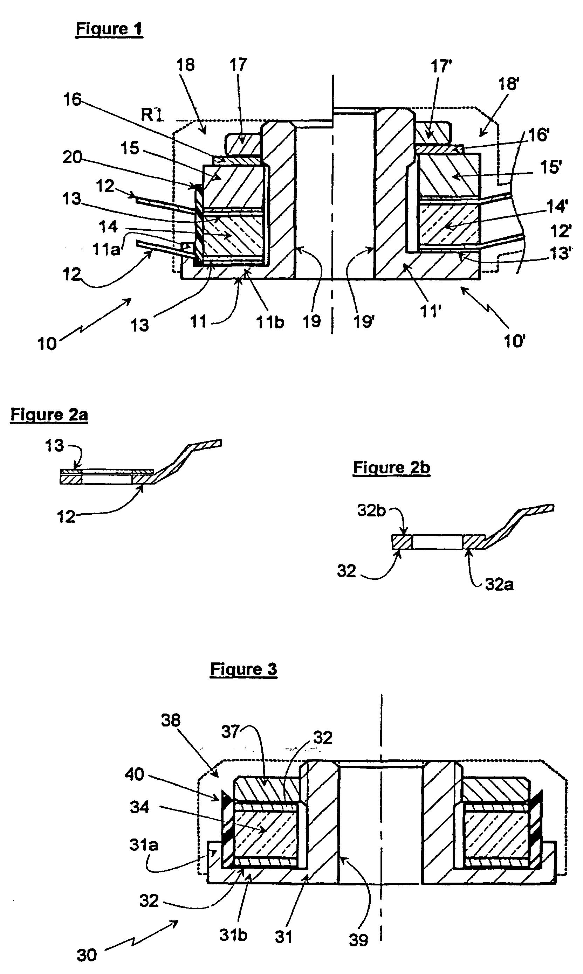

En référence à la partie droite de la figure 1, on va décrire un capteur de cliquetis de type connu.

Un capteur de cliquetis 10', de type connu, comporte généralement une embase 11' présentant un alésage central fileté 19' et une partie annulaire sur laquelle viennent s'empiler une rondelle isolante 13', un contact électrique 12', un élément sensible 14', un second contact électrique 12' et sa rondelle isolante 13', une masse sismique 15', une rondelle élastique de précontrainte 16' et un écrou de serrage 17'. L'écrou de serrage 17' permet de maintenir une certaine contrainte entre tous les éléments de l'empilage. L'ensemble ainsi constitué est généralement surmoulé par une résine synthétique 18'. Ce surmoulage présente des orifices et extensions appropriées pour laisser le passage à des fils de connexion électrique en contact avec la paire de contacts électriques 12'. Une vis de fixation non représentée est introduite dans l'alésage central fileté 19' et permet de fixer le capteur sur la culasse d'un moteur (non représenté). Cette vis de fixation permet de maintenir un contact étroit entre l'embase 11' et la culasse du moteur sur laquelle le capteur de cliquetis est fixé. Comme précédemment indiqué, un tel capteur de type connu présente un certain nombre d'inconvénients, notamment le nombre de pièces distinctes qu'il faut empiler lors de son montage, mais aussi une hauteur non négligeable.

Le capteur de cliquetis 10, selon l'invention (figure 1, partie gauche), comporte une embase 11 présentant un rebord annulaire 11a et une surface de contact amincie 11b. Ainsi, l'épaisseur de l'embase est fortement réduite dans la partie sur laquelle s'appuie l'empilage, formant ainsi une dépression annulaire délimitée par un rebord 11a vers l'extérieur. Ceci a pour effet de rapprocher l'élément sensible (constitué par un matériau piézo-électrique) de la culasse du moteur sur laquelle est monté le capteur. Le rebord de renfort 11a a pour effet de maintenir la rigidité de l'embase malgré la diminution de son épaisseur. Ce rebord présente une épaisseur inférieure ou égale à celle de la base amincie. Ceci va à l'encontre des idées communément admises selon lesquelles la linéarité du signal transmis par le capteur est proportionnelle à la rigidité de l'embase. En outre, le rebord annulaire sert également de pièce de précentrage pour l'empilage que l'on va venir placer sur l'embase.

A la figure 1, on voit notamment que l'empilage est constitué par une rondelle isolante 13, une paire de contacts électriques 12 répartis de part et d'autre d'un élément sensible 14, une masse sismique 15, une rondelle de précontrainte élastique 16 et un écrou 17. Une pièce de centrage 20 est en outre rajoutée à la périphérie interne du rebord annulaire et permet le centrage des différents éléments de l'empilage tout en isolant électriquement cet empilage du rebord annulaire de l'embase. Cette pièce 20 permet ainsi le centrage et le maintien de l'élément sensible en position sur l'embase. L'amincissement de la surface de contact 11b permet de réduire d'autant la hauteur de l'empilage, et par là même du capteur de cliquetis. La réduction ainsi obtenue est schématisée à la figure 1 par une double flèche référencée R.

Le capteur de cliquetis ainsi obtenu présente une hauteur moindre que les capteurs de cliquetis connus et assure une bonne linéarité de la réponse de ce capteur.

La figure 2a montre un contact électrique 12 de type connu qui est constitué par une simple rondelle électriquement conductrice destinée à être liée à un fil électrique (non représenté) et une rondelle isolante 13. Ce contact électrique muni de sa rondelle isolante est destiné à être placé de part et d'autre de l'élément sensible. Le contact électrique 12 est en contact avec l'élément sensible et la rondelle isolante 13 permet d'isoler électriquement l'élément sensible de l'embase ou de la masse sismique. Il est apparu avantageux de réaliser ce type de contact électrique d'une manière monobloc (figure 2b). Comme on le remarquera sur cette figure, le contact électrique 32 est muni d'une face électriquement conductrice 32a et d'une face isolante 32b. Le contact électrique 32 peut être réalisé, par exemple, par collage sous pression d'une matière isolante comme un papier, ou un film plastique, sur une plaque de cuivre ou de laiton, puis emboutissage simultané pour obtenir le contact électrique en forme. Une telle disposition présente l'avantage de lier intimement les éléments isolants et conducteurs, et de supprimer ainsi une interface, entre deux pièces distinctes lors du montage, préjudiciable à la linéarité du capteur. L'élément ainsi constitué est monobloc, ce qui permet bien sûr un meilleur contact entre le contact électrique et la rondelle isolante et diminue le nombre de pièces constituant l'empilage du capteur. Bien entendu, un tel contact électrique monobloc est utilisé pour chacun des deux contacts 12 répartis de part et d'autre de l'élément sensible. La figure 3 montre un tel empilage dans lequel deux contacts électriques 32 sont répartis de part et d'autre d'un élément sensible 34.

Sur cette figure 3, est également représenté un écrou 37 présentant un diamètre externe identique à celui de l'élément sensible et de la paire de contacts électriques et permettant le serrage de la paire de contacts électriques 32 et de l'élément sensible 34 contre la base amincie 31b de l'embase 31. On notera que dans ce mode de réalisation du capteur selon l'invention, la rondelle de précontrainte élastique 16 ainsi que la masse sismique 15 ont été supprimées et remplacées directement par l'écrou de serrage 37.

A cet effet, cet écrou de serrage est suffisamment large (identique à celui de l'empilage 32, 34 au moins) pour porter sur la majeure partie de la surface du contact 32 afin d'exercer une contrainte de serrage uniforme et homogène sur l'élément sensible.

Ainsi, par un choix de dimension appropriée de l'écrou 37, la masse sismique 15 et la rondelle de précontrainte 16 sont supprimées. L'écrou 37 présente ainsi, en plus de sa fonction de serrage classique, une fonction de masse sismique et de précontrainte élastique de l'élément sensible.

On notera que dans le cas de ce mode de réalisation, une pièce de centrage 40 réalise la même fonction que dans le cadre de la figure 1, et permet donc de séparer l'élément sensible 34 du rebord annulaire 31a d'un point de vue électrique, et d'autre part permet de réaliser facilement l'empilage des deux contacts électriques et de l'élément sensible.

Un tel capteur électrique présente une épaisseur réduite par rapport à un capteur classique et un nombre de pièces nettement amoindri. En outre, le rebord annulaire 31a permet de rigidifier l'embase 31 d'une manière telle que la sensibilité et la linéarité du signal de sortie d'un tel capteur s'en trouvent sensiblement améliorées, ceci malgré la réduction de l'épaisseur de cette embase. Un tel capteur présente, en outre, l'avantage d'être économique. En effet, le nombre de pièces réduit permet de diminuer de manière proportionnelle les coûts de fabrication.

Bien entendu, la présente invention n'est pas limitée au mode de réalisation ci-dessus décrit et comprend toute variante à la portée de l'homme de l'art. Ainsi, le rebord annulaire 11a ou 31a est muni de gorges appropriées pour laisser le passage aux connexions électriques avec les éléments de contact électrique 12 ou 32. De même, ce rebord annulaire 11a ou 31a peut ne pas être uniforme sur toute la périphérie de l'embase et présenter au moins une zone abaissée sur une partie de sa circonférence pour laisser passer des fils de connexion électrique vers l'extérieur, ou par économie de matière dans la mesure où la rigidité recherchée pour la surface de contact amincie est obtenue. On notera que la pièce de centrage (20, 40) est munie d'au moins une gorge adaptée pour permettre le passage de fils de connexion électrique.

## Revendications

1. Capteur (10, 30) adapté pour être monté sur un moteur à combustion interne pour y détecter l'apparition d'un phénomène de cliquetis, le dit capteur étant du type comportant une embase (11, 31) destinée à être fixée sur le moteur pour loger un élément (14, 34) sensible au cliquetis, le dit capteur étant constitué :
- de l'embase (11, 31) logeant un empilage comportant une paire d'éléments de contact (12, 32) répartis de part et d'autre de l'élément sensible au cliquetis (14, 34) et,
- - d'un écrou de serrage (37) comprimant uniformément l'empilage contre l'embase,
le dit capteur étant **caractérisé en ce que** l'écrou de serrage (37) remplace une masse sismique.

2. Capteur selon la revendication 1, **caractérisé en ce que** l'écrou de serrage (37) présente un diamètre identique à celui de l'empilage (32, 34).

3. Capteur selon l'une des revendications précédentes, **caractérisé en ce que** l'embase (11, 31) est munie d'un rebord annulaire (11a, 31a) de renfort et présente une surface de contact amincie (11b, 31b), en contact étroit avec le dit moteur.

4. Capteur selon la revendication 3, **caractérisé en ce que** le rebord annulaire (11a, 31a) présente au moins une zone abaissée sur une partie de sa circonférence adaptée pour laisser passer des fils de connexion électrique vers l'extérieur.

5. Capteur selon la revendication 3 ou 4, **caractérisé en ce qu'**une pièce de centrage (20, 40) est adaptée pour maintenir l'élément sensible (14, 34) en position sur l'embase.

6. Capteur selon la revendication 5, **caractérisé en ce que** la pièce de centrage (20, 40) est munie d'au moins une gorge adaptée pour permettre le passage de fils de connexion électrique.

7. Capteur, selon l'une quelconque des revendications précédentes, **caractérisé en ce qu'**il comporte en outre une paire d'éléments de contact (32) adaptés pour être en contact électrique avec l'élément sensible (14, 34), chaque élément de contact (32) étant réalisé de manière monobloc et présentant une première face (32a) électriquement conductrice et une seconde face (32b) isolante.

## Patentansprüche

1. Aufnehmer (10, 30), der an einer Brennkraftmaschine anbringbar ist, um dort das Auftreten einer Klopferscheinung zu detektieren, wobei der Aufnehmer von einer Bauart ist, die einen Grundkörper (11,31) aufweist, der an der Brennkraftmaschine befestigbar ist, um ein klopfempfindliches Element (14, 34) aufzunehmen, wobei der Aufnehmer gebildet wird:
- von dem Grundkörper (11, 31), der einen Stapel mit einem Paar Kontaktelementen (12, 32) aufnimmt, welche beidseitig zu dem klopfempfindlichen Element (14, 34) verteilt sind, und
- von einer Klemmmutter (37), die den Stapel gleichförmig gegen den Grundlörper zusammendrückt,
wobei der Aufnehmer **dadurch gekennzeichnet ist, dass** die Klemmmutter (37) eine seismische Masse ersetzt

2. Aufnehmer nach Anspruch 1, **dadurch gekennzeichnet, dass** die Klemmmutter (37) einen Durchmesser hat, der identisch zu dem des Stapels (32, 34) ist.

3. Aufnehmer nach einem der vorhergehenden Ansprüche, **dadurch gekennzeichnet, dass** der Grundkörper (11, 31) mit einem ringförmigen Verstärkungsrand (11a, 31a) versehen ist und eine verdünnte Kontaktfläche (11b, 31b) in engem Kontakt mit der Brennkraftmaschine aufweist.

4. Aufnehmer nach Anspruch 3, **dadurch gekennzeichnet, dass** der Verstärkungsrand (11a, 31a) mindestens eine reduzierte Zoneüber einem Teil seines Umfangs aufweist, der dazu dient, elektrische Anschlussdrähte nach außenpassieren zu lassen.

5. Aufnehmer nach Anspruch 3 oder 4, **dadurch gekennzeichnet, dass** ein Zentrierstück (20, 40) dazu dient, das klopfempfindliche Element ((14, 34) in seiner Lage auf dem Grundkörper zu halten.

6. Aufnehmer nach Anspruch 5, **dadurch gekennzeichnet, dass** das Zentrierstück (20, 40) mit mindestens einer Nut versehen ist, die den Durchgang elektrischer Verbindungsdrähte ermöglicht.

7. Aufnehmer nach einem der vorhergehenden Ansprüche, **dadurch gekennzeichnet, dass** er ferner ein Paar Kontaktelemente (32) aufweist, die mit dem klopfempfindlichen Element (14, 34) in elektrischen Kontakt treten können, wobei jedes Kontaktelement (32) einstückig ausgebildet ist und eine elektrisch leitende erste Fäche (32a) und eine isolierende zweite Fläche (32b) aufweist.

## Claims

1. A sensor (10, 30) suitable for mounting on an internal combustion engine in order to detect the occurrence of the knock phenomenon, said sensor comprising a base (11, 31) designed to be fixed onto the engine in order to house an element (14, 34) sensitive to knock, said sensor being comprised of:
- the base (11, 31) housing a stack comprising a pair of electrical contacts (12, 32) positioned one either side of the element that is sensitive to knock (14, 34) and
- a securing nut (37) evenly pressing the stack against the base,
said sensor being **characterised in that** the securing nut (37) replaces a seismic mass.

2. A sensor according to Claim 1, **characterised in that** the securing nut (37) has an identical diameter to that of the stack (32, 34).

3. A sensor according to any one of the preceding Claims, **characterised in that** the base (11, 31) has a reinforcing annular rim (11a, 31a) and has a thinner contact surface (11b, 31b) tightly fixed to said engine.

4. A sensor according to Claim 3, **characterised in that** the annular rim (11a, 31a) has at least one recessed area on a portion of its circumference suitable for allowing the passage of electrical connection wires to the exterior.

5. A sensor according to Claim 3 or Claim 4, **characterised in that** a centring piece (20, 40) is suitable for holding the sensing element (14, 34) in position on the base.

6. A sensor according to Claim 5, **characterised in that** the centring piece (20, 40) has at least one groove suitable for allowing the passage of electrical connection wires.

7. A sensor, according to any one of the preceding Claims, **characterised in that** it also comprises a pair of contacts (32), suitable for maintaining electrical contact with the sensing element (14, 34), each contact element (32) being made in a single unit and having one electrically conductive surface (32a) and one insulating surface (32b).
